# EUROPEAN PATENT APPLICATION

(11) **EP 4 575 791 A2**
(43) Date of publication of application: **25.06.2025**
(21) Application number: 24218285.5
(22) Date of filing: 09.12.2024
(51) Int. Cl.: G06F 11/07, G06F 11/16

(54) **SYSTEM, APPARATUS AND METHOD FOR LOCKSTEP CORRECTED ERROR REPORTING, DATA POISONING AND POTENTIAL RECOVERY MECHANISMS**

(30) Priority: 18.12.2023 US 202318543101
(71) Applicant: INTEL Corporation, Santa Clara, CA 95054 (US)
(72) Inventor: Mattord, Samuel, Austin, TX 78749 (US); Raman, Arvind, Austin, TX 78749 (US)
(74) Representative: Samson & Partner Patentanwälte mbB

(57) **Abstract**

In one embodiment, an apparatus includes: first and second cores to execute instructions, and an interface circuit coupled to the first and second cores. In a lockstep mode in which the first and second cores are to execute redundantly, the interface circuit is to identify a miscompare between the first core and the second core that is due to a corrected error in one of the first core or the second core, and indicate the miscompare as a recoverable error. Other embodiments are described and claimed.

## Description

### Background

Many modern processors provide mechanisms to reduce silent data errors, which can occur as a result of a single bit flip somewhere in a signal processing path. One such technique is Dynamic Lockstep Mode (DLSM), which is an enhanced reliability, availability, and serviceability (RAS) capability that can be selectively enabled for protecting high integrity applications, containers, virtual machines (VMs), and sub-routines by allowing system software to place logical processors into and out of lockstep mode. In DLSM, two cores are placed into a mode of operation where they execute in lockstep cycle-by-cycle to execute the same instruction in a given cycle. Any functional divergence between them while in this mode is detected, allowing a much higher rate of error detection. This error detection triggers an error indication that may cause a software platform reset, which is a very costly and time-consuming process, particularly in a datacenter context.

### Brief Description Of The Drawings

FIG. 1 is a block diagram of a portion of a processor in accordance with an embodiment.
FIG. 2 is a block diagram of a portion of a processor in accordance with another embodiment.
FIG. 3 is a flow diagram of a method in accordance with an embodiment.
FIG. 4 is a flow diagram of a method in accordance with another embodiment.
FIG. 5 illustrates an example computing system.
FIG. 6 illustrates a block diagram of an example processor in accordance with an embodiment.
FIG. 7 is a block diagram of a processor core in accordance with an embodiment.

### Detailed Description

In a processor having lockstep capabilities, when common outputs of two functional units (e.g., two cores in a core pair) diverge, a miscompare is detected. This miscompare can be indicated via a machine check event.

In various embodiments, the processor is provided with circuitry to identify a miscompare resulting from a corrected error that occurred in a core pair involved in lockstep operation. In addition, this circuitry is configured to notify a software entity regarding the miscomparison. More specifically, in some cases the circuitry may inform the software by way of a recoverable error indication (e.g., a Software Recoverable Action Required (SRAR)) in a machine check status register.

This indication allows the notified software to take appropriate action, as SRAR errors are uncorrected errors that software can attempt recovery from. Once software has performed a certain recovery action, it is possible to continue execution. This software-initiated action, in many cases, can be far less severe than a response to an uncorrected error as would otherwise be raised without an embodiment. That is, software may choose to handle a recoverable error in a more graceful manner than for an uncorrected error. For example, software can recover from the error without causing a platform reset.

Stated another way, embodiments help reduce a blast radius of errors and help achieve increased uptime, especially in a processor configured for use in a datacenter. The processor circuitry described herein can detect when a miscomparison between a common result determined by two (or more) cores is as a result of a corrected error. In this way, embodiments avoid the promotion of severity of a corrected error to an uncorrected error due to lockstep operation, achieving more platform uptime, especially for large scale datacenters.

Core-scoped corrected errors can be detected at any time, including during lockstep operation. While embodiments are applicable to various forms of lockstep operation, the discussion herein focuses on such errors occurring during DLSM. These errors generally result in a timing implication given the time incurred in correction. Such errors are typically logged in core-scoped (internal to a core) architectural state such as a machine check status register or other model specific register, for software consumption. Both this timing implication and this core-scoped error logging cause cores executing in lockstep to miscompare. Without an embodiment, when a DLSM miscompare occurs, an uncorrected error event is triggered, which requires a software platform reset, which as described above is an expensive occurrence. Stated another way, default DLSM behavior, without an embodiment, has the practical effect of promoting the severity of a core-scoped corrected error to an uncorrected error.

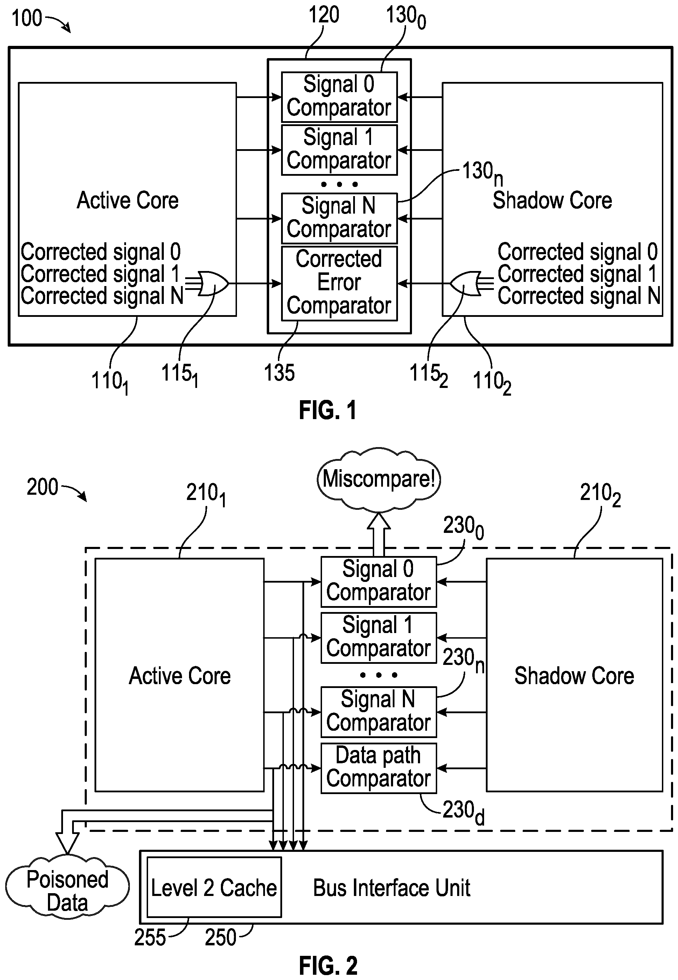

Referring now to FIG. 1, shown is a block diagram of a portion of a processor in accordance with an embodiment. As shown in FIG. 1, processor 100 includes a plurality of cores. In the implementation shown, a pair of cores 110_{1, 2} are illustrated that collectively form a core pair that can be placed in a redundancy mode such as a DLSM. Understand that cores 110 may operate independently outside of a lockstep mode. When placed into a lockstep mode, core 110₁ may be configured as an active core and core 110₂ may be configured as a shadow core to redundantly execute in lockstep the same instruction stream so that execution results may be compared within an interface circuit 120.

As shown in FIG. 1, interface circuit 120 includes a plurality of comparators, including a plurality of signal comparators 130_{0-N}. Each such signal comparator 130 is configured to compare common results from cores 110, namely signals that are routed beyond the core perimeter of these cores. Understand that signal comparators 130 may be used to compare corresponding outputs of the cores to ensure that the outputs match. In the case of a mismatch, a miscomparison is identified. In general, a miscomparison may cause a DLSM to be deactivated.

As further illustrated in FIG. 1, cores 110 include a logic circuit 115_{1, 2}, configured as a logical OR gate. As illustrated, each logic OR gate 115 receives inputs from various functional units of the given core. More specifically, these inputs are corrected error signals, that are output from a functional unit when an error (such as an error correction coding (ECC) or other such error) has been corrected within the core. In operation whenever logic circuit 115 receives an active corrected error signal from a functional unit, it sends an active corrected error indication signal to a corrected error comparator 135 within interface circuit 120. Logic gate 115 thus operates to logically OR core-scoped corrected errors together into a single signal that is provided to corrected error comparator 135.

In this way, one or more core-scoped corrected error detections are logically ORed into a single signal that is brought to a module level, namely interface circuit 120 of the core pair boundary. Within interface circuit 120, comparator 135 is treated as a special type of miscompare. When software enables this architecturally visible capability, and a first miscompare is of type corrected error, the comparator error is logged, e.g., in a machine check status register or other model specific register, as recoverable.

While in some implementations, the processor hardware described in FIG. 1 and the corrected error handling discussed herein can be configured as default processor behavior, in other cases this circuitry and its operation can be enabled as an opt-in feature. In such cases, when software opts-in, the circuitry operates to treat miscompares that are caused by the detection of a corrected error as a recoverable error instead of an uncorrected error.

In a particular embodiment, a processor identifies support for DLSM via a CPU identifier, e.g., in an x86 processor as CPUID(0x7).ECX(0x1).EDX[12:12], which provides for DLSM MSR accessibility. In turn, the opt-in capability of corrected error handling described herein can be set in a given configuration storage, e.g., a MSR. In one embodiment a capabilities register may include a field to indicate support for the opt-in feature as follows:
IA32_DLSM_CAPABILITIES[CORRECTED_MISCO_SEVERITY]. In turn, software can set a field of the configuration register when activating DLSM to opt-in to this capability. Specific exemplary registers are described below.

Embodiments thus provide software with an architectural mechanism to opt-in to a mode for treating corrected errors that cause miscompares as recoverable. In an embodiment this opt-in feature, when activated, can report a miscompare due to a corrected error via a recoverable (e.g., SRAR) machine check signature. Software can determine a proper course of action in response to this machine check signature.

One or more embodiments may also leverage data poisoning to enable a graceful resolution of a miscomparison between cores operating in a lockstep mode. In data poisoning, an indication of an uncorrected error is carried with data that suffers from the uncorrected error. This mechanism allows for software containment of uncorrected errors on a datapath. To this end, the poison indicator, which may be a single bit to indicate an uncorrected error when set, extends from within cache structures within a core to main memory. In general, an error is marked as poisoned when an uncorrected error is detected at that address, and the poison indication follows that data wherever it goes in a system. If that data is consumed by software, a fault contains the error and allows software the opportunity to recover from it by terminating only affected software streams.

Embodiments provide a hardware capability for marking as poisoned data writes originating from a core pair that has encountered a miscompare. This is true even if a data write itself is the first source of a miscompare. This capability allows for the impact of a miscompare to be contained on the datapath. In this way, software can reduce the blast radius of a core pair that has encountered a miscompare to only the software running on that core pair.

Referring now to FIG. 2, shown is a block diagram of a portion of a processor in accordance with another embodiment. Processor 200 is implemented similarly to system 100 of FIG. 1 (with the same reference numerals, albeit of the "200" series). Note that in FIG. 2, additional comparator 230_{d} is implemented as a datapath comparator. In embodiments herein, datapath comparator 230_{d} is configured to compare output data from each core 210 to identify if a mismatch occurs. When data poisoning in accordance with an embodiment is enabled, a mismatch indicated by datapath compared to 230_{d} triggers a marking of a given datum as poisoned. This poison indicator may flow through the machine with the datum. Thus as shown in FIG. 2, write data that has been associated with a mismatch in datapath comparator 230_{d} may be provided to a memory hierarchy with a poison indicator. In FIG. 2, bus interface unit 250 may include a level 2 cache 255 and when a datapath mismatch is identified, the write data may be stored in cache 255 with a set poison indicator.

As shown in FIG. 2, BIU 250 hardware marks all stores from a miscomparing core pair as poisoned until DLSM deactivation completes in response to the miscompare. This arrangement protects hardware on the address path that could otherwise introduce silent data corruption into the address space of an OS, host, or other guest. Although shown at this high level in the embodiment of FIG. 2, many variations and alternatives are possible.

One example use case for this poisoned-based error reporting can be for "closable" software like a virtual machine (VM) guest workload. In this use case a hypervisor such as a virtual machine monitor (VMM) manages data accesses such that a miscompare can be attributed to a known set of closable VM guests.

While in some implementations, the processor hardware described in FIG. 2 and the data poisoning handling discussed herein can be configured as default processor behavior, in other cases this circuitry and its operation can be enabled as an opt-in feature. In such cases, when software opts-in, the circuitry operates to mark stores coming from a core pair that has encountered a miscompare as poisoned.

In one or more embodiments, an additional opt-in enables hardware logging of miscompares as recoverable instead of uncorrected. When enabled, the hardware intercepts data stores from active core hardware and marks them as poisoned if they occur as or after a miscompare has been detected, e.g., until DLSM deactivation completes.

The opt-in capability of data poisoning as described herein can be set in a given configuration storage, e.g., a MSR. In one embodiment a capabilities register may store a field to provide the opt-in feature for poisoned handling on a miscompare as follows: IA32_DLSM CAPABILITIES[POISON_MISCO] = 1 enumerates the capability for poison containment of a core pair that has detected a miscompare. In turn, software can set a field in a configuration register when activating DLSM to opt-in to this capability.

Another capabilities indicator, IA32_DLSM_CAPABILITIES[SRAR MISCO] = 1 enumerates the capability for marking miscompares as recoverable errors. Software can set another field in a configuration register when activating DLSM to opt-in to this capability. In an embodiment, software can set the POISON_MISCO when software chooses to set SRAR_MISCO.

Referring now to Table 1, shown is an example capabilities register for DLSM operation, including fields to identify presence of the features described herein.

**TABLE 1**

| **Bits** | **Read/ Write** | **Bit Name** | **Description** |
|---|---|---|---|
| 7:0 | RO | DLSM_LEVEL_ TYPE | The topology level at which lockstep can be configured: |
| | | | 0: Invalid. |
| | | | 1: SMT. |
| | | | 2: Core. |
| | | | 3: Module. |
| | | | 4: Tile. |
| | | | 5: Die. |
| | | | 6-255: Reserved |
| 8 | RO | CAN_BE_ACTIV E | 0: This logical processor cannot be made part of active group of logical processors |
| | | | 1: This logical processor can be made part of active group of logical processors |
| 9 | RO | CAN_BE_SHAD OW | 0: This logical processor cannot be made part of shadow group of logical processors |
| | | | 1: This logical processor can be made part of shadow group of logical processors |
| 10 | RO | CORRECTED_ MISCO_SEVERI TY | Enumerates support of the capability to log recoverable errors if the first miscompare is due to a corrected error. |
| 11 | RO | POISON_MISC O | Enumerates support of the capability to assert poison for writes that come from a core-pair that have encountered a miscompare. |
| 12 | RO | SRAR_MISCO | Enumerates support of the capability to log recoverable when a core-pair encounters a miscompare. |
| 31:13 | RSVD | RSVD | Reads return 0. |
| 63:32 | RO | PEER_TOPOLO GY_ID | The DLCS level type enumerates the topology level at which a logical processor can be put in lockstep. |
| | | | The topology ID of the peer group of logical processors is enumerated here. For example, if the lockstep is supported at "Core" level then this is the peer Core ID, if the lockstep is supported at "Tile" level then this is the peer Tile ID. |

Referring now to Table 2, shown is an example configuration register for setting various behaviors for DLSM operation in accordance with an embodiment.

In one or more embodiments, this command register may be a thread-scoped register, and in a particular embodiment can be enumerated as an IA32_DLSM_CMD register and may have the fields and definitions shown in Table 2 below:

**TABLE 2**

| **Bits** | **Read/ Write** | **Bit Name** | **Description** |
|---|---|---|---|
| 0 | W | COMMAND | 1 -ACTIVATE |
| | | | Enable DLSM with this logical processor in role specified by ROLE bit. |
| | | | 0 - DEACTIVATE |
| | | | Disable DLSM if enabled. If DLSM is not enabled, then the command is ignored and WRMSR completes silently |
| 1 | W | ROLE | 0 - EN_AS_ACT |
| | | | Activate DLSM with this logical processor in ACTIVE role. This bit can be set only on logical processors that enumerate ability to assume ACTIVE role. |
| | | | 1 - EN_AS_SHDW |
| | | | Activate DLSM with this logical processor in SHADOW role. This bit can be set only on logical processors that enumerate ability to assume SHADOW role. |
| | | | ROLE is ignored if the COMMAND is DEACTIVATE. |
| 2 | W | BINTBRK | Whether broadcast interrupts deactivate lockstep. |
| | | | Ignored on ACTIVE roles. Only relevant for SHADOW roles. |
| | | | 0 - shadow ignores broadcast interrupt |
| | | | 1 - deactivate on broadcast interrupts |
| 3 | W | MCE_ENABLE | Whether machine check should be signaled for a lockstep miscompare. |
| | | | Ignored on SHADOW roles. Only relevant for ACTIVE roles. |
| | | | 0 - Do not signal MCE |
| | | | 1 - signal MCE |
| 4 | W | CORRECTED_MISCO_ SEVERITY | Whether corrected errors that occur before other miscompares are treated as recoverable. |
| | | | Ignored on SHADOW roles. Only relevant for ACTIVE roles. |
| | | | 0 - all miscompares result in UC errors |
| | | | 1 - corrected errors that cause miscompares result in SRAR; other miscompares result in UC errors* |
| | | | *does not apply if SRAR_MISCO is set |
| 5 | W | POISON_MISCO | Whether poison indications should be asserted for writes coming from a core-pair that has encountered a miscompare. |
| | | | Ignored on SHADOW roles. Only relevant for ACTIVE roles. |
| | | | 0 - do not assert poison for a core-pair that has encountered a miscompare |
| | | | 1 - assert poison for a core-pair that has encountered a miscompare* |
| | | | *does not apply if miscompare due to corrected error and CORRECTED_MISCO_SEVERITY is set |
| 6 | W | SRAR_MISCO | When set, causes all miscompares to be logged as a recoverable error. When set, it is recommended that software also set POISON_MISCO. |
| | | | Ignored on SHADOW roles. Only relevant for ACTIVE roles. |
| | | | 0 - log an uncorrected error when a core-pair encounters a miscompare |
| | | | 1 - log a recoverable error when a core-pair encounters a miscompare |
| 63:7 | RSVD | | |

Referring now to Table 3, shown is an illustration of miscompare handling in accordance with an embodiment. More specifically, Table 3 illustrates the effect of a miscomparison based on configuration settings in a configuration register in accordance with an embodiment.

**TABLE 3**

| **IA32_DLSM_CMD Activation Inputs** | **Corrected miscompare behavior** | **Other miscompare behavior** |
|---|---|---|
| CORRECTED_MISCO_SEVERITY=0 | MCi_STATUS: UC/PCC | MCi_STATUS: UC/PCC |
| POISON_MISCO=0 | | |
| SRAR_MISCO=0 | Core pair writes: no poison | Core pair writes: no poison |
| CORRECTED_MISCO_SEVERITY=1 | MCi_STATUS: SRAR | MCi_STATUS: UC/PCC |
| POISON_MISCO=0 | | |
| SRAR_MISCO=0 | Core pair writes: no poison | Core pair writes: no poison |
| CORRECTED_MISCO_SEVERITY=0 | MCi_STATUS: UC/PCC | MCi_STATUS: UC/PCC |
| POISON_MISCO=1 | | |
| SRAR_MISCO=0 | Core pair writes: poison | Core pair writes: poison |
| CORRECTED_MISCO_SEVERITY=1 | MCi_STATUS: SRAR | MCi_STATUS: UC/PCC |
| POISON_MISCO=1 | | |
| SRAR_MISCO=0 | Core pair writes: no poison | Core pair writes: poison |
| CORRECTED_MISCO_SEVERITY=0 | MCi_STATUS: SRAR | MCi_STATUS: SRAR |
| POISON_MISCO=0 | | |
| SRAR_MISCO=1 | Core pair writes: no poison | Core pair writes: no poison |
| CORRECTED_MISCO_SEVERITY=1 | MCi_STATUS: SRAR | MCi_STATUS: SRAR |
| POISON_MISCO=0 | | |
| SRAR_MISCO=1 | Core pair writes: no poison | Core pair writes: no poison |
| CORRECTED_MISCO_SEVERITY=0 | MCi_STATUS: SRAR | MCi_STATUS: SRAR |
| POISON_MISCO=1 | | |
| SRAR_MISCO=1 | Core pair writes: poison | Core pair writes: poison |
| CORRECTED_MISCO_SEVERITY=1 | MCi_STATUS: SRAR | MCi_STATUS: SRAR |
| POISON_MISCO=1 | | |
| SRAR_MISCO=1 | Core pair writes: no poison | Core pair writes: poison |

As shown in Table 3, when the CORRECTED_MISCO_SEVERITY field is set when DLSM is activated, a miscompare that is first detected with a corrected error signaling event results in an SRAR error being logged. In addition, a miscompare of this type does not result in poison being asserted even if POISON_MISCO is set. In one or more embodiments,
CORRECTED_MISCO_SEVERITY only impacts the type of error logged if the first detected miscompare is due to a corrected error detection event. Other types of miscompares result in an uncorrectable error.

As further shown in Table 3, when the POISON_MISCO field is set when DLSM is activated, this poisoning mechanism causes hardware poisoning of any data writes (both stores and evictions) that come from a core pair after it has detected a miscompare, thus achieving containment for address and data corruption. However, if the first detected miscompare is due to a corrected error signaling event and CORRECTED_MISCO_SEVERITY is set, data will not be marked as poison even if POISON_MISCO is set. This is because the machine state and workload may potentially be recoverable without workload termination. This can avoid unnecessarily marking data as poisoned.

When the SRAR_MISCO field is set when DLSM is activated, a recoverable error is logged if any type of miscompare is detected. This capability and this type of error requires software action to recover from and may allow software to avoid a warm reset when miscompares of this class are detected. For this error type, software is responsible for determining whether recovery is possible and what recovery actions, if any, are to occur. If software desires address and data containment of a core pair that detects a miscompare, software can enable POISON_MISCO alongside SRAR_MISCO when activating DLSM.

In order to properly recover from such a miscompare, software can ensure that the error is limited to a specific scope of software (e.g., to a VM or application) and terminate it. Other VMs or applications however can remain active. If a miscompare is detected in other non-terminatable software scopes (e.g., detected during VMM or OS execution), the error may be treated as unrecoverable.

When a SRAR occurs due to a corrected error being the cause of the first miscompare detected and CORRECTED_MISCO_SEVERITY is enabled, the corrected error may be logged in both the active and shadow core machine check architecture (MCA) banks. When miscompares of this type are detected, a machine check status register may indicate that restarting execution with the interrupted context is possible. When the miscompare is detected, comparison is stopped and DLSM deactivation begins. Software may choose to attempt to reestablish lockstep mode and continue execution at the point of execution where the active core deactivated lockstep, in some embodiments.

Software may wish to enable POISON_MISCO when it chooses to enable SRAR_MISCO. If software enables POISON_MISCO, it may operate to clear out poisoned lines generated by DLSM deactivation. When miscompares of this type are detected, a machine check status register may indicate that restarting execution with the interrupted context is possible. If software has determined that this recoverable miscompare was limited to a terminatable software domain (e.g. VM guest or application), system software can terminate that software domain, but may continue execution in other contexts (e.g., other VM guests or applications). If system software has determined that this recoverable miscompare is associated with a non-terminatable software domain (e.g., a VMM), the error may be treated as unrecoverable.

Embodiments may thus contain a miscompare effect by leveraging data poisoning. That is, instead of logging a miscompare as an uncorrected error triggering a platform reset, the miscompare is logged as a recoverable error that allows software to terminate affected workloads and then continue execution.

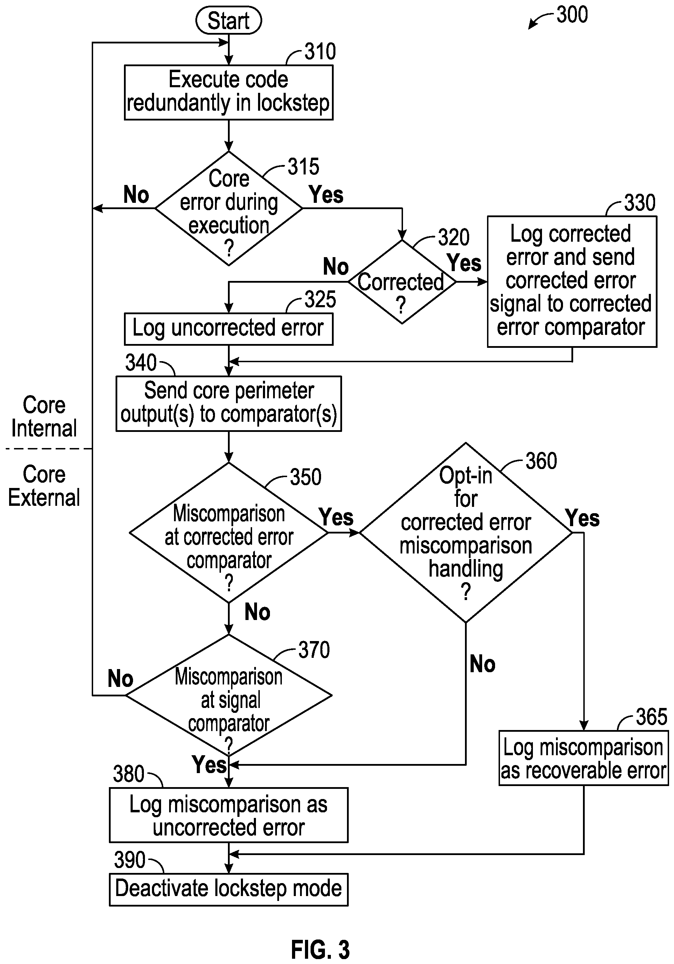

Referring now to FIG. 3, shown is a flow diagram of a method in accordance with an embodiment. Method 300 of FIG. 3 is a method for providing corrected error reporting while in a lockstep mode in accordance with an embodiment. Method 300 may be performed by hardware circuitry, including both core-internal circuitry and core-external circuitry such as interface circuitry between a core pair and/or additional core-external circuitry, such as a bus interface unit. In some implementations method 300 may be performed by this hardware circuitry alone and/or in combination with firmware and/or software.

Method 300 begins when cores are configured into a lockstep mode in which they execute the same instructions redundantly (block 310). Assume for purposes of discussion that the lockstep mode is DLSM. During execution it is determined whether a core error (namely a core-scoped error) occurs (diamond 315). If not, continued redundant code execution occurs at block 310. When an error is identified, it is determined whether the error has been corrected (diamond 320). If not, the uncorrected error is logged, e.g., in a machine check or other model specific register.

Still referring to FIG. 3 instead if the error is a corrected error, control passes to block 330 where the corrected error is logged and a corrected error signal is sent to a corrected error comparator such as shown above in FIG. 1. Next, control passes to block 340 where various core perimeter outputs can be sent to associated comparators of an interface circuit that couples together active and shadow cores of a core pair.

Next in this interface circuit it is determined at diamond 350 whether this miscomparison has occurred at a corrected error comparator. Note that this miscomparison when identified is thus an identification of a core-pair scoped error. If so, control passes next to diamond 360 to determine whether opt-in behavior for corrected error miscomparisons is enabled. This determination may be based on a setting in a model specific register, (e.g., in a miscomparison severity field of a DLSM command register). If this opt-in behavior is enabled, control passes to block 365 where the miscompare is logged as a recoverable error. For example, in one embodiment a SRAR indicator may be set within a given machine check status register.

Still referring to FIG. 3, if there is no corrected error comparator miscomparison, control passes next to diamond 370 to determine whether there is a miscomparison at a signal comparator. If not, further redundant code execution occurs at block 310. If such miscomparison is identified, control passes to block 380 where the miscomparison may be logged as an uncorrected error. Thereafter control passes to block 390, where steps are taken to deactivate the lockstep mode. Control also passes to block 390 for lockstep mode deactivation after recoverable error logging has been performed at block 365. Although shown at this high level in the embodiment of FIG. 3, many variations and alternatives are possible.

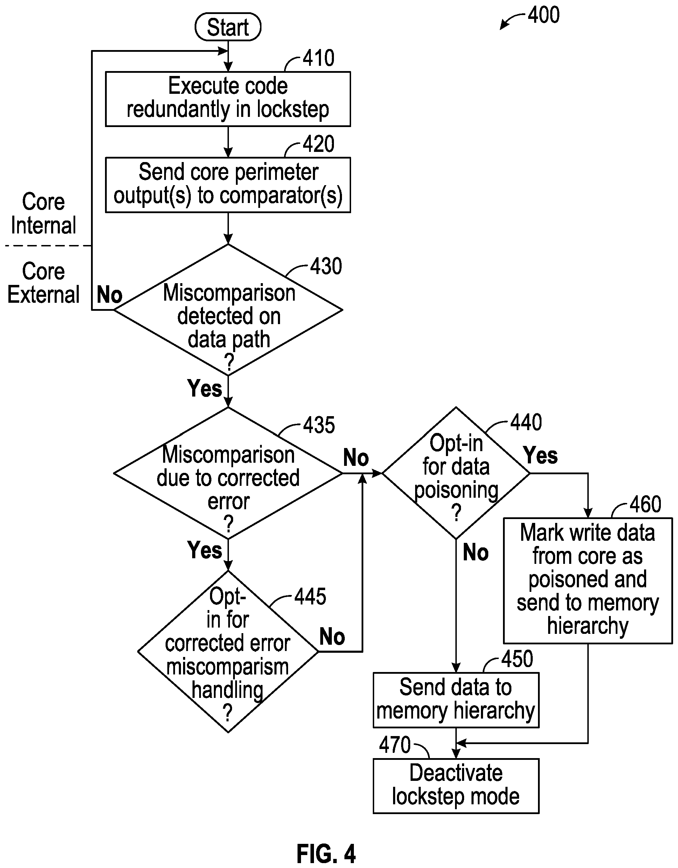

Referring now to FIG. 4, shown is a flow diagram of a method in accordance with another embodiment. Method 400 of FIG. 4 is a method for providing data poisoning while in a lockstep mode in accordance with an embodiment. Method 400 may be performed by the same hardware circuitry (and/or firmware and/or software) as discussed above in FIG. 3.

Method 400 begins when cores are configured into a lockstep mode in which they execute code redundantly (block 410). Again assume for purposes of discussion that the lockstep mode is DLSM. During execution, core perimeter outputs (e.g., outputs from various functional units) are sent to comparators of an interface circuit that couples cores of a core pair (block 420). Next it is determined in the interface circuit whether a miscomparison is detected on a datapath, as may be identified via a miscomparison in one or more datapath comparators (diamond 430). If not, continued redundant code execution occurs at block 410.

When a datapath miscomparison identified, it is determined whether it is due to a corrected error (diamond 435). If not, control passes to diamond 440 where it is determined whether opt-in behavior for data poisoning is enabled. This determination may be based on a setting in a model specific register, (e.g., in a poison miscomparison enable field of a DSLM command register). If this opt-in behavior is enabled, control passes to block 460 where the write data from the core is marked as poisoned and is sent to a memory hierarchy. Next at block 470 steps may be taken to deactivate the lockstep mode.

Still referring to FIG. 4, instead if it is determined at diamond 440 that data poisoning has not been enabled, control passes to block 450 where the write data may be sent directly to the memory hierarchy without any marking of the data as poisoned. Thereafter, control again passes to block 470 for deactivation of the lockstep mode.

Finally, with further reference to FIG. 4, if the miscomparison that is detected on the datapath is due to a corrected error miscomparison (as determined at diamond 435), control passes to diamond 445. At diamond 445, it is determined whether opt-in behavior for corrected error miscomparisons is enabled (as may be determined based on a model specific register setting). If this opt-in behavior is enabled, control passes to block 450 where the data is sent directly to the memory hierarchy without any poison marking, since corrected error reporting is enabled. Otherwise, when this opt-in behavior is not enabled, control passes to diamond 440 discussed above (to determine whether to mark the data as poisoned). Although shown at this high level in the embodiment of FIG. 4, many variations and alternatives are possible.

As discussed above, the programmable behaviors described herein can be enabled by system software such as a virtual machine monitor (VMM) or other hypervisor, OS, firmware or so forth. To enable or disable the corrected error and/or data poisoning described herein, such privileged software can write to a MSR such as a command register.

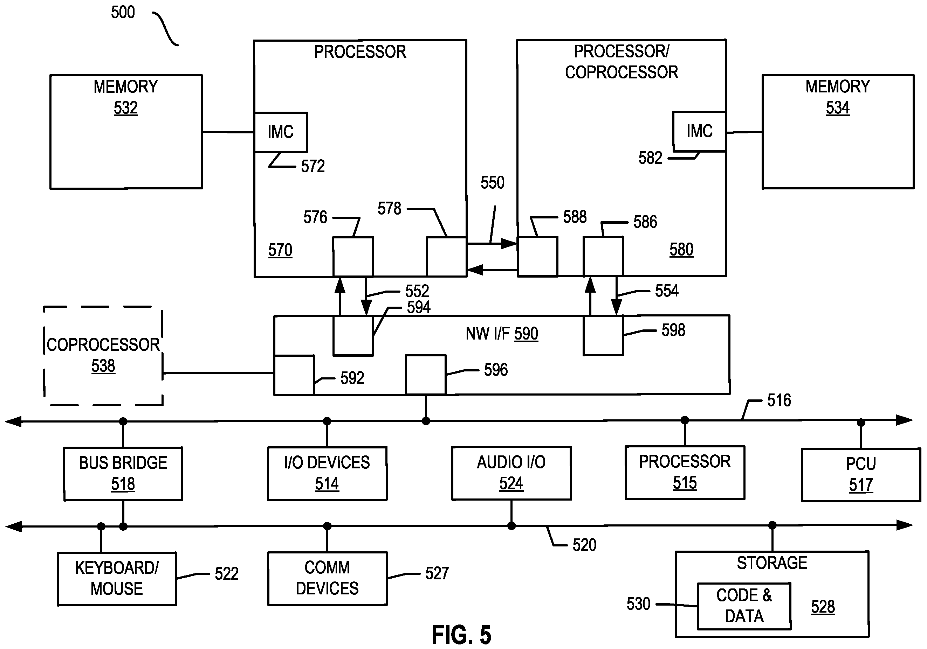

FIG. 5 illustrates an example computing system. Multiprocessor system 500 is an interfaced system and includes a plurality of processors or cores including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example system 500 is shown to have two processors, the system may have three or more processors, or may be a single processor system. In some examples, the computing system is a SoC. In any event, system 500 includes interface circuitry as described herein to perform DLSM and identify at least certain miscomparisons as recoverable errors and/or poison write data as described herein.

Processors 570 and 580 are shown including integrated memory controller (IMC) circuitry 572 and 582, respectively. Processor 570 also includes interface circuits 576 and 578; similarly, second processor 580 includes interface circuits 586 and 588. Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors.

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a coprocessor 538 via an interface circuit 592. In some examples, the coprocessor 538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect or another I/O interconnect. In some examples, first interface 516 is coupled to a power control unit (PCU) 517, which may include circuitry, software, and/or firmware to perform power management operations with regard to the processors 570, 580 and/or co-processor 538. PCU 517 provides control information to a voltage regulator (not shown) to cause the voltage regulator to generate the appropriate regulated voltage. PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software.

Various I/O devices 514 may be coupled to first interface 516, along with a bus bridge 518 which couples first interface 516 to a second interface 520. In some examples, one or more additional processor(s) 515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

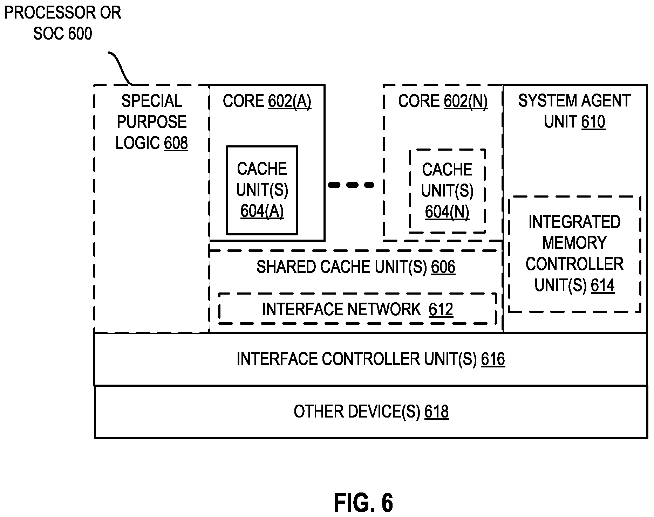

FIG. 6 illustrates a block diagram of an example processor and/or SoC 600 that may have one or more cores and an integrated memory controller. The solid lined boxes illustrate a processor 600 with a single core 602(A), system agent unit circuitry 610, and a set of one or more interface controller unit(s) circuitry 616, while the optional addition of the dashed lined boxes illustrates an alternative processor 600 with multiple cores 602(A)-(N), a set of one or more integrated memory controller unit(s) circuitry 614 in the system agent unit circuitry 610, and special purpose logic 608, as well as a set of one or more interface controller units circuitry 616. Note that the processor 600 may be one of the processors 570 or 580, or co-processor 538 or 515 of FIG. 5.

Thus, different implementations of the processor 600 may include: 1) a CPU with the special purpose logic 608 being integrated graphics and/or scientific (throughput) logic (which may include one or more cores, not shown), and the cores 602(A)-(N) being one or more general purpose cores (e.g., general purpose in-order cores, general purpose out-of-order cores, or a combination of the two); 2) a coprocessor with the cores 602(A)-(N) being a large number of special purpose cores intended primarily for graphics and/or scientific (throughput); and 3) a coprocessor with the cores 602(A)-(N) being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller units circuitry 616 couple the cores 602 to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic). The display unit circuitry is for driving one or more externally connected displays. At least special-purpose logic 608 includes interface circuitry 609, which may perform the core pair-based analysis of redundant execution, and in some cases and depending on configuration settings, identify miscomparisons due to corrected errors as recoverable errors and/or to identify resulting write data as poisoned, as described herein. Of course, similar circuitry may be located throughout processor 600, including within cores 602, system agent unit 610, and shared cache unit 606.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA.

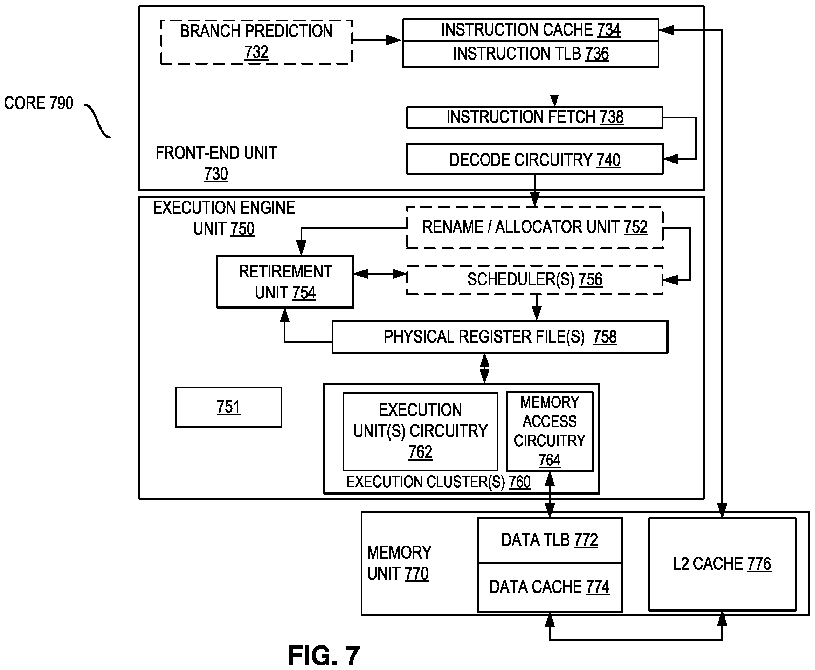

FIG. 7 shows a processor core 790 including front-end unit circuitry 730 coupled to execution engine unit circuitry 750, and both are coupled to memory unit circuitry 770. The core 790 may be a reduced instruction set architecture computing (RISC) core, a complex instruction set architecture computing (CISC) core, a very long instruction word (VLIW) core, or a hybrid or alternative core type. As yet another option, the core 790 may be a special-purpose core, such as, for example, a network or communication core, compression engine, coprocessor core, general purpose computing graphics processing unit (GPGPU) core, graphics core, or the like.

The front-end unit circuitry 730 may include branch prediction circuitry 732 coupled to instruction cache circuitry 734, which is coupled to an instruction translation lookaside buffer (TLB) 736, which is coupled to instruction fetch circuitry 738, which is coupled to decode circuitry 740. In one example, the instruction cache circuitry 734 is included in the memory unit circuitry 770 rather than the front-end circuitry 730. The decode circuitry 740 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 740 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 740 may be implemented using various different mechanisms. Examples of suitable mechanisms include, but are not limited to, look-up tables, hardware implementations, programmable logic arrays (PLAs), microcode read only memories (ROMs), etc. In one example, the core 790 includes a microcode ROM (not shown) or other medium that stores microcode for certain macroinstructions (e.g., in decode circuitry 740 or otherwise within the front-end circuitry 730). In one example, the decode circuitry 740 includes a micro-operation (micro-op) or operation cache (not shown) to hold/cache decoded operations, micro-tags, or micro-operations generated during the decode or other stages of the processor pipeline 700. The decode circuitry 740 may be coupled to rename/allocator unit circuitry 752 in the execution engine circuitry 750.

The execution engine circuitry 750 includes the rename/allocator unit circuitry 752 coupled to retirement unit circuitry 754 and a set of one or more scheduler(s) circuitry 756. The scheduler(s) circuitry 756 represents any number of different schedulers, including reservations stations, central instruction window, etc. In some examples, the scheduler(s) circuitry 756 can include arithmetic logic unit (ALU) scheduler/scheduling circuitry, ALU queues, address generation unit (AGU) scheduler/scheduling circuitry, AGU queues, etc. The scheduler(s) circuitry 756 is coupled to the physical register file(s) circuitry 758. Each of the physical register file(s) circuitry 758 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 758 includes vector registers unit circuitry, writemask registers unit circuitry, and scalar register unit circuitry. These register units may provide architectural vector registers, vector mask registers, general-purpose registers, etc. The physical register file(s) circuitry 758 is coupled to the retirement unit circuitry 754 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 754 and the physical register file(s) circuitry 758 are coupled to the execution cluster(s) 760. The execution cluster(s) 760 includes a set of one or more execution unit(s) circuitry 762 and a set of one or more memory access circuitry 764. The execution unit(s) circuitry 762 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 756, physical register file(s) circuitry 758, and execution cluster(s) 760 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 764). It should also be understood that where separate pipelines are used, one or more of these pipelines may be out-of-order issue/execution and the rest in-order.

In some examples, the execution engine unit circuitry 750 may perform load store unit (LSU) address/data pipelining to an Advanced Microcontroller Bus (AMB) interface (not shown), and address phase and writeback, data phase load, store, and branches.

The set of memory access circuitry 764 is coupled to the memory unit circuitry 770, which includes data TLB circuitry 772 coupled to data cache circuitry 774 coupled to level 2 (L2) cache circuitry 776. In one example, the memory access circuitry 764 may include load unit circuitry, store address unit circuitry, and store data unit circuitry, each of which is coupled to the data TLB circuitry 772 in the memory unit circuitry 770. The instruction cache circuitry 734 is further coupled to the level 2 (L2) cache circuitry 776 in the memory unit circuitry 770. In one example, the instruction cache 734 and the data cache 774 are combined into a single instruction and data cache (not shown) in L2 cache circuitry 776, level 3 (L3) cache circuitry (not shown), and/or main memory. The L2 cache circuitry 776 is coupled to one or more other levels of cache and eventually to a main memory.

As further shown in FIG. 7, various portions of the processor core 790 can include circuitry to identify certain core-scoped errors as corrected errors, and trigger a notification to core-external circuitry such as the interface circuitry described herein, when these corrected errors occur during a DLSM or other lockstep mode. To this end, execution engine 750 includes logic circuitry 751, which may be core-wide OR logic to send a corrected error signal out of the core in response to an indication of a corrected error occurring within any one of a variety of locations within the core. Although not shown for ease of illustration, understand that memory unit 770 also may include such logic circuitry to identify corrected errors as described herein.

The following examples pertain to further embodiments.

In one example, an apparatus includes: a first core to execute instructions; a second core to execute instructions, where in a lockstep mode, the first core and the second core are to execute in lockstep; and an interface circuit coupled to the first core and the second core, where in the lockstep mode the interface circuit is to identify a miscompare between the first core and the second core that is due to a corrected error in one of the first core or the second core, and indicate the miscompare as a recoverable error.

In an example, the interface circuit further to indicate the miscompare as the recoverable error responsive to a first value in a miscompare severity field of a model specific register.

In an example, the interface circuit is to indicate the miscompare as an uncorrected error responsive to a second value in the miscompare severity field of the model specific register.

In an example, the apparatus is to deactivate the lockstep mode in response to the miscompare.

In an example, the first core comprises a first logic circuit to receive a corrected error indication from at least one functional circuit and in response to the corrected error indication, send a corrected error signal to the interface circuit.

In an example, the interface circuit comprises a corrected error comparator to receive the corrected error signal and indicate the miscompare due to the corrected error in response to the corrected error signal.

In an example, the interface circuit comprises a plurality of signal comparators, each of the plurality of signal comparators to compare a result from the first core with a redundant result from the second core.

In an example, the interface circuit comprises at least one datapath comparator, and in response to a second miscompare between the first core and the second core detected by the at least one datapath comparator, the apparatus is to write at least one datum to a memory hierarchy and mark the at least one datum with a poison indicator when a poison field of a model specific register has a first value to enable the poison indicator marking.

In an example, the interface circuit comprises a bus interface, the bus interface to mark the at least one datum with the poison indicator and send the at least one datum and the poison indicator to the memory hierarchy.

In an example, in response to the poison indicator, a system software is to clear the at least one datum from the memory hierarchy and terminate a first software domain during which the second miscompare occurred, while a second software domain is maintained active.

In an example, in response to a datapath miscompare between the first core and the second core, the apparatus is to write at least one datum to a memory hierarchy and: mark the at least one datum with a poison indicator when a poison field of a model specific register has a first value to enable the poison indicator marking; and not mark the at least one datum with the poison indicator when the poison field of the model specific register has a second value to disable the poison indicator marking.

In another example, a method comprises: identifying, in processor circuitry of a processor, a mismatch between first data output from a first core and first redundant data output from a second core while the first core and the second core are operating in a lockstep mode; determining whether the processor is enabled for poisoned miscomparison reporting; and in response to identifying the mismatch and determining that the processor is enabled for the poisoned miscomparison reporting, associating a poison indicator with the first data and sending the first data and the poison indicator to a memory hierarchy.

In an example, the method further comprises in response to identifying the mismatch, deactivating the lockstep mode.

In an example, the method further comprises: determining whether the processor is enabled for miscomparison severity reporting; and in response to identifying the mismatch and determining that the processor is enabled for the poisoned miscomparison reporting and the miscomparison severity reporting, not associating the poison indicator with the first data and sending the first data to the memory hierarchy, responsive to the processor circuitry identifying that a corrected error occurred in at least one of the first core or the second core.

In an example, the method further comprises accessing a field of a model specific register to determine whether the processor is enabled for the poisoned miscomparison reporting, the field to be written by system software.

In an example, the method further comprises: in response identifying the mismatch, deactivating the lockstep mode; clearing the first data from the memory hierarchy; and terminating a first software domain during which the mismatch occurred.

In an example, the method further comprises maintaining active at least one other software domain while terminating the first software domain.

In another example, a computer readable medium including instructions is to perform the method of any of the above examples.

In a further example, a computer readable medium including data is to be used by at least one machine to fabricate at least one integrated circuit to perform the method of any one of the above examples.

In a still further example, an apparatus comprises means for performing the method of any one of the above examples.

In yet another example, a system includes a processor and a dynamic random access memory coupled to the processor. The processor may include: a first register having a first field to store one or more first bits to enable or disable a corrected error indication for a miscomparison in a lockstep mode due to a corrected error; a first core to execute instructions; a second core to execute instructions, where in the lockstep mode, the first core and the second core are to execute redundantly; and interface circuitry coupled to the first core and the second core, where the interface circuitry is to identify a miscomparison between the first core and the second core that is due to a corrected error in one of the first core or the second core, and indicate the miscomparison as a recoverable error when the one or more first bits enable the corrected error indication.

In an example, the first register further comprises a second field to store one or more second bits to indicate enablement or disablement of data poisoning for a miscomparison in the lockstep mode.

In an example, in response to the miscomparison in the lockstep mode, the interface circuitry is to mark write data from the first core with a poison indicator and send the write data and the poison indicator to the dynamic random access memory when the one or more second bits enable the data poisoning.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SOC or other processor, is to configure the SOC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. An apparatus comprising:
a first core to execute instructions;
a second core to execute instructions, wherein in a lockstep mode, the first core and the second core are to execute in lockstep; and
an interface circuit coupled to the first core and the second core, wherein in the lockstep mode the interface circuit is to identify a miscompare between the first core and the second core that is due to a corrected error in one of the first core or the second core, and indicate the miscompare as a recoverable error.

2. The apparatus of claim 1, wherein the interface circuit further to indicate the miscompare as the recoverable error responsive to a first value in a miscompare severity field of a model specific register.

3. The apparatus of claim 2, wherein the interface circuit is to indicate the miscompare as an uncorrected error responsive to a second value in the miscompare severity field of the model specific register.

4. The apparatus of claim 1, wherein the apparatus is to deactivate the lockstep mode in response to the miscompare.

5. The apparatus of claim 1, wherein the first core comprises a first logic circuit to receive a corrected error indication from at least one functional circuit and in response to the corrected error indication, send a corrected error signal to the interface circuit.

6. The apparatus of claim 5, wherein the interface circuit comprises a corrected error comparator to receive the corrected error signal and indicate the miscompare due to the corrected error in response to the corrected error signal.

7. The apparatus of claim 6, wherein the interface circuit comprises a plurality of signal comparators, each of the plurality of signal comparators to compare a result from the first core with a redundant result from the second core.

8. The apparatus of any one of claims 1-7, wherein the interface circuit comprises at least one datapath comparator, and in response to a second miscompare between the first core and the second core detected by the at least one datapath comparator, the apparatus is to write at least one datum to a memory hierarchy and mark the at least one datum with a poison indicator when a poison field of a model specific register has a first value to enable the poison indicator marking.

9. The apparatus of claim 8, wherein the interface circuit comprises a bus interface, the bus interface to mark the at least one datum with the poison indicator and send the at least one datum and the poison indicator to the memory hierarchy.

10. A method comprising:
identifying, in processor circuitry of a processor, a mismatch between first data output from a first core and first redundant data output from a second core while the first core and the second core are operating in a lockstep mode;
determining whether the processor is enabled for poisoned miscomparison reporting; and
in response to identifying the mismatch and determining that the processor is enabled for the poisoned miscomparison reporting, associating a poison indicator with the first data and sending the first data and the poison indicator to a memory hierarchy.

11. The method of claim 10, wherein the method further comprises in response to identifying the mismatch, deactivating the lockstep mode.

12. The method of claim 10, wherein the method further comprises:
determining whether the processor is enabled for miscomparison severity reporting; and
in response to identifying the mismatch and determining that the processor is enabled for the poisoned miscomparison reporting and the miscomparison severity reporting, not associating the poison indicator with the first data and sending the first data to the memory hierarchy, responsive to the processor circuitry identifying that a corrected error occurred in at least one of the first core or the second core.

13. The method of claim 10, wherein the method further comprises:
in response identifying the mismatch, deactivating the lockstep mode;
clearing the first data from the memory hierarchy; and
terminating a first software domain during which the mismatch occurred.

14. At least one computer readable storage medium having stored thereon instructions, which if performed by a machine cause the machine to perform the method of any one of claims 10 to 13.

15. An apparatus comprising means to perform a method as claimed in any one of claims 10 to 13.
